Europäisches Patentamt

(19) European Patent Office    (11) Veröffentlichungsnummer : **0 075 313**

Office européen des brevets    **B1**

(12)    **EUROPÄISCHE PATENTSCHRIFT**

(45) Veröffentlichungstag der Patentschrift :    (51) Int. Cl.⁴ : **A 01 C  7/00**
**11.12.85**

(21) Anmeldenummer : **82108695.6**

(22) Anmeldetag : **20.09.82**

(54) **Landwirtschaftliche Vorrichtung.**

(30) Priorität : **21.09.81 DE 3137435**
            **21.09.81 DE 3137484**
            **16.10.81 DE 3141104**
            **30.03.82 DE 3211683**

(43) Veröffentlichungstag der Anmeldung :
    **30.03.83 Patentblatt 83/13**

(45) Bekanntmachung des Hinweises auf die Patenter-
    teilung : **11.12.85 Patentblatt 85/50**

(84) Benannte Vertragsstaaten :
    **AT DE FR GB IT NL SE**

(56) Entgegenhaltungen :
    **DE-A- 2 438 575**
    **FR-A- 2 432 164**
    **US-A- 4 100 538**

(73) Patentinhaber : **Firma Franz Kirchberger KG.**
    **Lichtenfelser Strasse 43**
    **D-8623 Staffelstein (DE)**

(72) Erfinder : **Kirchberger, Franz**
    **Lichtenfelser Strasse 43**
    **D-8623 Staffelstein (DE)**
    Erfinder : **Bienlein, Heinrich**
    **Unnersdorfer Strasse 2**
    **D-8623 Staffelstein (DE)**

(74) Vertreter : **LOUIS, PÖHLAU, LOHRENTZ & SEGETH**
    **Kesslerplatz 1 P.B. 3055**
    **D-8500 Nürnberg (DE)**

**Beschreibung**

Die Erfindung betrifft eine landwirtschaftliche Vorrichtung zum Ausbringen von flüssigem, pulverförmigem oder körnigem Kultiviergut, mit einem an einem Traggestell gelagerten Vorratsbehälter zur Aufnahme des Kultiviergutes.

Zur Ausbringung von Saatgut, Düngemitteln, Sprüh- und Spritzmitteln zur Unkraut- und Schädlingsbekämpfung werden für den jeweiligen Zweck besonders geeignete Maschinen und Geräte verwendet, die das auszubringende Material in einem Vorratsbehälter mitführen und die mit Hilfe eines Traktors, Schleppers oder einer Zugmaschine über die zu bearbeitende landwirtschaftliche Nutzfläche gefahren werden. Der Antrieb für die Ausbringung des Kultiviergutes erfolgt dabei entweder über die Laufräder der Maschine oder über eine vom Traktor angetriebene, meist kardanisch aufgehängte Antriebswelle. Als Beispiele dienen Sämaschinen, bei denen das Getreide im mitgeführten Saatkasten untergebracht ist. Bei Düngerstreuern wird das pulverförmige bis körnige Material ebenfalls in einem Vorratsbehälter mitgeführt, der von oben gefüllt wird. Schädlings- und Unkrautbekämpfungsmittel werden meist in flüssiger Form mitgeführt und über verschiedenartig arbeitende Düsen auf das Land bzw. die Kulturpflanzen gespritzt oder gesprüht. Dabei ist es zur Erzielung eines optimalen Ernteergebnisses oder einer optimalen Qualität von besonderer Bedeutung, daß die auszubringenden Mittel, z. B. wegen ihrer Kosten, wegen ihrer Wirkung oder ihres Bodenbesatzes (Verstockung) wegen der Art des Bodens, in der günstigsten Menge pro Flächeneinheit ausgebracht werden. Deshalb ist eine laufende Kontrolle des Gewichtes oder des Inhalts des Vorratsbehälters während der Landarbeit von eminenter Bedeutung. Kann sich der Landwirt laufend, beispielsweise mit Hilfe eine Anzeigeinstrumentes, über den jeweiligen Vorrat des Kultiviergutes im Behälter informieren, so ist es ihm auch möglich, eine Kontrolle über die ausgebrachte Menge auszuüben und darüber hinaus in Relation zu der bereits bearbeiteten Fläche die spezifische Ausbringungsdichte abzuschätzen oder zu berechnen. Die Anzeige des Gewichts im Behälter erlaubt deshalb eine Beurteilung darüber, ob die gewünschte und zu Beginn der Feldarbeit an der Maschine eingestellte Mengenverteilung über die Bodenfläche, d. h. die erforderliche Konzentration, erreicht worden ist.

Die bekannten Vorrichtungen zur Ausbringung einer bestimmten Menge des Kultiviergutes pro Flächeneinheit arbeiten auf mechanischem oder hydromechanischem Wege, bei denen in Abhängigkeit von der Fahrgeschwindigkeit über Dosierräder oder Wurfschaufeln bei festen Stoffen, bzw. bei bestimmten Düseneinstellungen oder Druckbeaufschlagungen bei Flüssigkeiten, die vorab mit Hilfe von Tabellen oder aufgrund von Erfahrungswerten eingestellten Werte erzielt werden sollen. Die vorgewählten Einstellungen führen jedoch häufig zu falschen Ergebnissen, weil durch nicht vorhersehbare oder nicht erfaßbare Einflußfaktoren der Sollwert der Ausbringungsmenge beeinflußt wird. Hierzu gehört z. B. der Schlupf der Laufräder auf dem Boden, Erschütterungen, die während der Fahrt oder der Arbeit des Kultiviergerätes auf den Dosiermechanismus einwirken, wechselnde Gleitfähigkeit von gekörntem Saatgut, das während der Aussaat unterschiedlich gebeizt wird und deshalb mehr oder weniger aneinander haftet, und im Vorratsbehälter Brücken bildet, vor allem bei leichtem Saatgut und bei Düngemitteln durch Feuchtigkeit und dadurch hervorgerufenen Verklebungen, wechselnde Viskosität der Spritzflüssigkeit, Veränderungen der zu bearbeitenden Bodenfläche hinsichtlich ihrer physikalischen Eigenschaft und ihrer Formationen und ggf. auch Witterungseinflüsse. Wegen dieser Zufalleinflüsse genügt es nicht, die Drehzahl der Dosiereinrichtung in konstanter Abhängigkeit von der Drehzahl der Maschinenlaufräder zu steuern bzw. den Druck für das auszubringende Spritzmittel zu regulieren. Da wie oben dargelegt, die einzelnen Einflußfaktoren nicht erfaßt werden können, wird die eingestellte Dosierung nur durch die ständige Kontrolle der ausgebrachten Menge in bezug auf die bereits bearbeitete Fläche und einer laufenden Korrektur der Einstellung erreicht werden können. Bisher hat man das Volumen des Saatkasteninhalts entweder mechanisch durch Schwimmer, welche auf der Getreideoberfläche aufliegen sollen, optisch durch Schaugläser oder elektrisch durch Infrarot- oder Lichtschranken oder auch Kontaktschalter gemessen. Alle diese Verfahren arbeiten ungenügend, denn Schwimmer graben sich, insbesondere bei Erschütterungen, leicht in das Getreide ein, Kontaktschalter arbeiten mangelhaft bei leichten und zur Brückenbildung neigenden Saatgütern, während die übrigen Meßeinrichtungen schnell verstauben und dadurch unbrauchbar werden.

Zusammenfassend kann daher festgestellt werden, daß mit keiner der vorstehenden Methoden eine exakte quantitative Erfassung der jeweiligen Saatgutmenge im Saatkasten einer Sämaschine möglich ist.

In der landtechnischen Praxis wird meist noch nach umständlichen Methoden gearbeitet. Bei Sämaschinen wird z. B. nach einer Saattabelle zunächst eine Grobeinstellung der Dosiereinrichtung vorgenommen. Weil aber das Tausendkorngewicht des Saatgutes unterschiedlich ist, muß der Dosiermechanismus vor der eigentlichen Feldarbeit im Stand der Maschine abgedreht werden, um eine Probemenge des Saatgutes zu erhalten, die dann auf einer separaten Waage abgewogen werden muß. Nach Prüfung des Ergebnisses wird dann die Einstellung so oft nachgestellt, bis das gewünschte Ergebnis erreicht ist. Bei der darauffolgenden Feldarbeit wird aber dieses mühsam erzielte Ergebnis aus den oben angeführten Gründen verfälscht. Die derzeitige Praxis ist deshalb ebenso umständlich wie ungenau.

Aufgabe der Erfindung ist es deshalb, die landwirtschaftliche Vorrichtung der eingangs genannten Art zu schaffen, bei der durch Erfassen des Gewichtes des Vorratsbehälters und damit des Gewichtes des mitgeführten Kultiviergutes das Ausbringen des Kultiviergutes dosierbar ist.

Diese Aufgabe wird bei einem ersten Ausführungsbeispiel dadurch gelöst, daß an dem Traggestell ein Kragträger befestigt ist, an dem der Vorratsbehälter mittels eines allseits beweglichen Haltegliedes unter gleichzeitiger Führung in senkrechter Richtung aufgehängt ist, und daß zum Erfassen des Gewichtes des Vorratsbehälters ein Meßfühler zwischen Vorratsbehälter und Traggestell angeordnet ist.

Nach einem zweiten Ausführungsbeispiel ist an dem Traggestell ein Kragträger befestigt, auf dem von unten her der Vorratsbehälter mittels eines Haltegliedes unter gleichzeitiger Führung in senkrechter Richtung abgestützt ist, und ist zum Erfassen des Gewichtes des Vorratsbehälters ein Meßfühler zwischen Vorratsbehälter und Traggestell angeordnet.

Nach einem dritten Ausführungsbeispiel ist der Vorratsbehälter über mindestens ein ihn starr mit dem Traggestell verbindenden Verbindungsstück außerhalb der Ebene seines Schwerpunktes abgestützt und ist zum Erfassen des Gewichtes des Vorratsbehälters mindestens ein Dehnungsmeßstreifen am Verbindungsstück angeordnet.

Nach einem vierten Ausführungsbeispiel ist ein pneumatisches oder hydropneumatisches Federsystem zwischen Traggestell und Vorratsbehälter und dem Federsystem als Meßfühler zur Erfassung des Gewichtes des Vorratsbehälters und im Federsystem ein als Meßfühler zur Erfassung des Gewichtes des Vorratsbehälters dienender Druckfühler vorgesehen, wobei das Federsystem wenigstens zwei hydropneumatische Federn und jede hydropneumatische Feder eine Kolbenzylindereinheit und einen Druckbehälter aufweist, der durch eine elastische Trennwand in einen Gasdruckabschnitt und einen Hydraulikabschnitt unterteilt ist, wobei der Hydraulikabschnitt über eine Leitung mit der Kolbenzylindereinheit und der Gasdruckabschnitt über eine Drossel mit dem Druckfühler verbunden ist.

Alle Ausführungsformen beruhen auf dem gemeinsamen Prinzip, den Gegenstand des Vorratsbehälters durch eine Gewichtsmessung des ganzen Behälters zu bestimmen, wobei Beschleunigungskräfte beim Anfahren und Bremsen sowie Kräfte bei Schräglagen der Vorrichtung für die Messung weitgehend keine Störungsquellen bilden können.

Bevorzugte weitere Ausbildungen der Ausführungsbeispiele sind in den abhängigen Ansprüchen angegeben.

Weitere Einzelheiten der Erfindung und ihrer Vorteile sind im folgenden anhand der Ausführungsbeispiele näher beschrieben und in den Zeichnungen dargestellt. In der Zeichnung zeigen :

Figur 1 zeigt die Erfindung anhand einer Sämaschine in der Ansicht von hinten in schematischer Darstellung,

Figur 2 zeigt die wesentlichen Teile der Sämaschine nach Fig. 1 in der Seitenansicht,

Figur 3 zeigt die Sämaschine nach Fig. 1 in der Rückansicht, jedoch mit einer anders ausgebildeten Lagerung des Vorratsbehälters,

Figur 4 zeigt die Maschine nach Fig. 3 in der Seitenansicht,

Figur 5 zeigt den Vorratsbehälter in Seitenansicht mit Aufhängung an einem Gummifederelement,

Figur 6 zeigt eine Seitenansicht des Vorratsbehälters, der auf einem Gummifederelement aufgestützt ist,

Figur 7 zeigt in einem Blockschaltbild die elektrische Meßanordnung mit einer Brückenschaltung,

Figur 8 zeigt die Schaltung einer Dosier-Steuervorrichtung,

Figur 9 zeigt eine schematische Querschnittsansichteines Saatkastens einer Drillmaschine, abgestützt auf hydropneumatischen Federn, welche Teile einer Meßvorrichtung bilden,

Figur 10 zeigt eine schematische Rückansicht der Anordnung nach Fig. 9, jedoch ohne Saatrohre und Fahrgestell,

Figur 11 zeigt einen Querschnitt durch die Aufhängung eines Vorratsbehälters an einem landwirtschaftlichen Gerät und

Figur 12 zeigt drei verschiedene schematische Darstellungen eines an Torsionsstäben aufgehängten Vorratsbehälters.

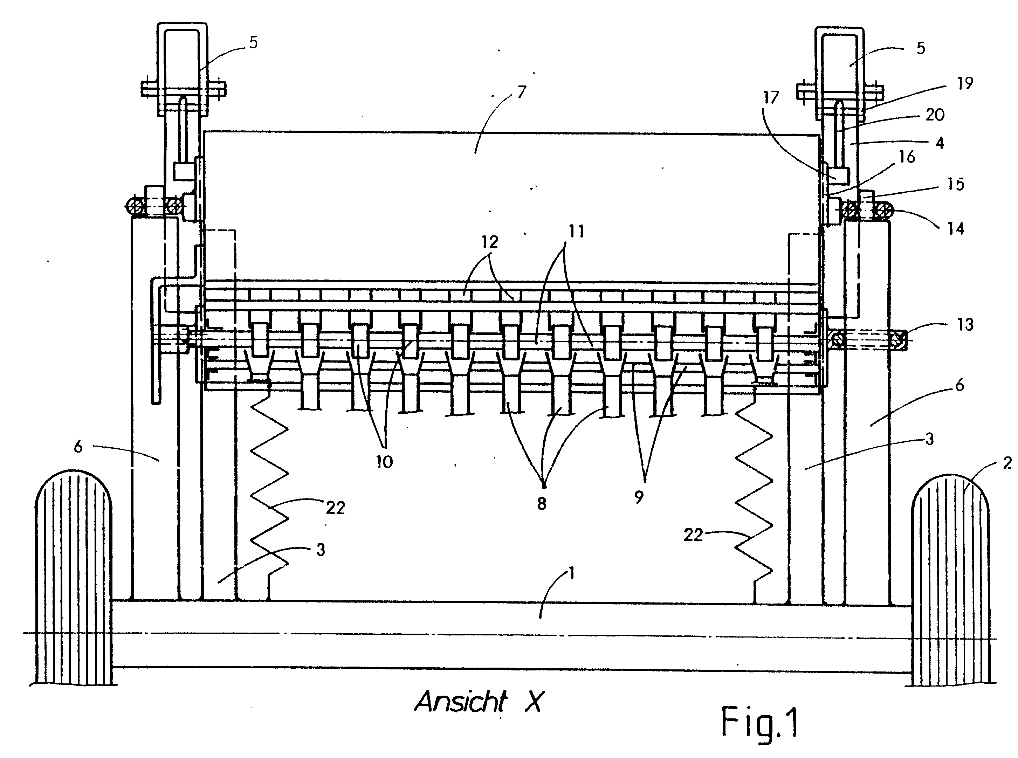

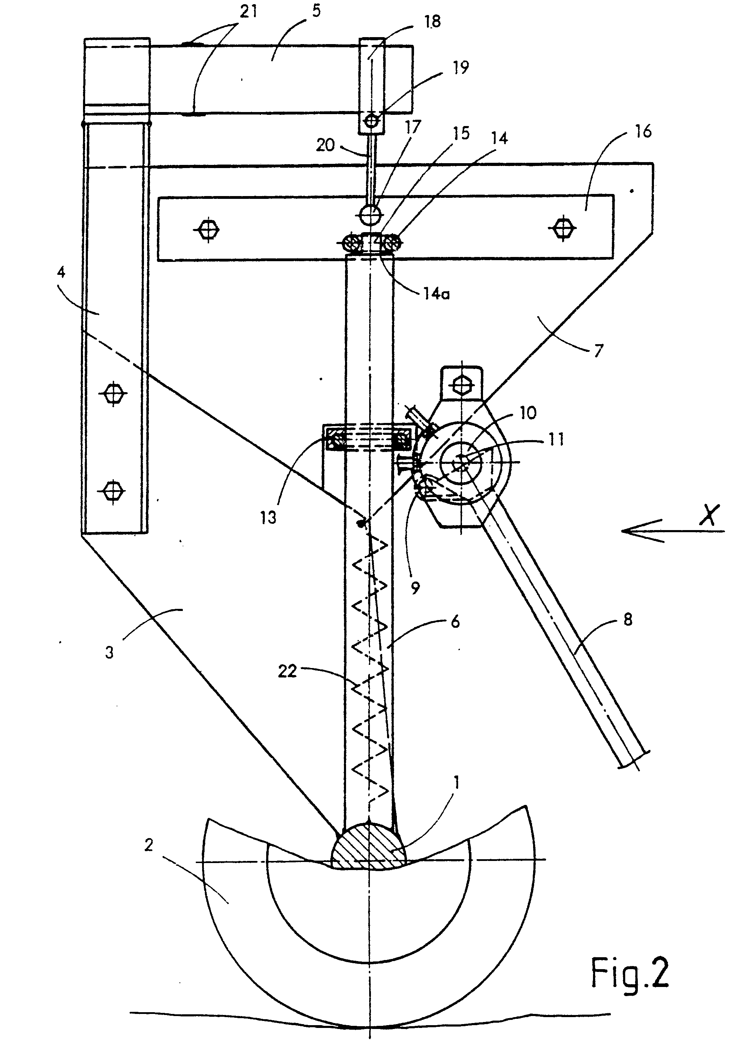

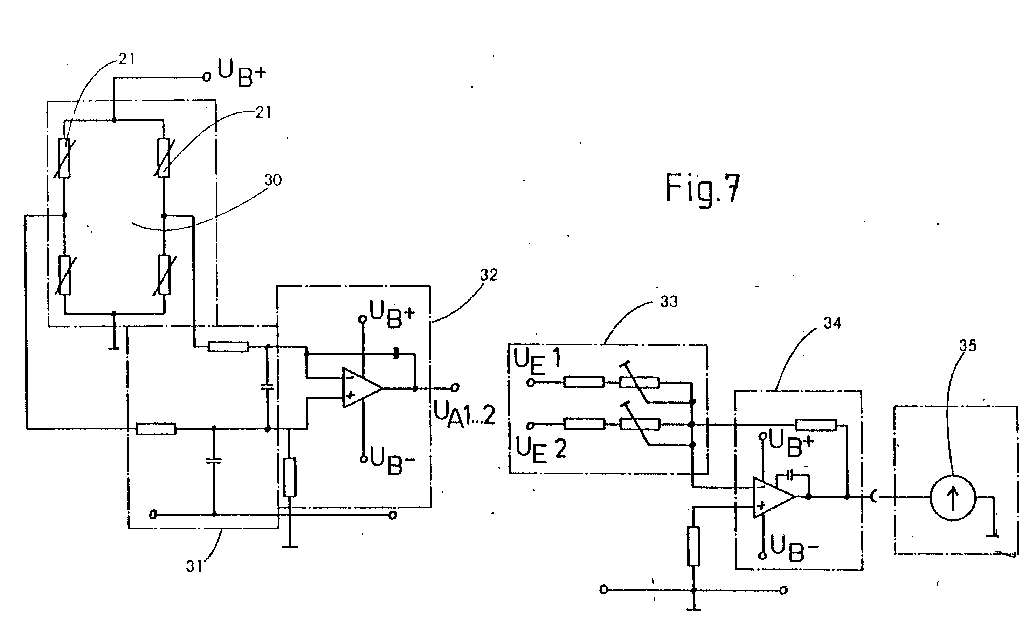

In den Figuren 1 und 2 ist die Erfindung am Beispiel einer Sä- oder Drillmaschine dargestellt, bei der das Maschinengestell auf einer Achse 1 abgestützt ist und mit den Laufrädern 2 beispielsweise mit Hilfe eines Traktors, einer Zugmaschine oder eines Schleppers über die zu bestellende Nutzfläche gefahren werden kann. An der Achse 1 ist an beiden Seiten ein Maschinenrahmen 3, und an diesem jeweils eine senkrechte Tragstrebe 4 befestigt, die einen waagerechten Balken in Form eines Krag- oder Torsionsträgers 5 trägt. An beiden Seiten der Achse 1 ist weiterhin je eine senkrechte Tragsäule 6 befestigt, an der der Vorratsbehälter 7, im gezeigten Beispiel der Kasten zur Aufnahme des Saatgetreides, geführt ist. An den Vorratsbehälter 7 der Sämaschine schließen sich die üblichen Ausbringrohre 8 an, die an Haltewellen 9 gelagert sind und denen über die Dosierräder 10 die gewünschte Menge des Saatgutes zugeführt wird. Die Dosierräder 10 sitzen auf der Antriebswelle 11 und können bei Nichtgebrauch der Maschine von der Versorgung mit Saatgut mit Hilfe der Schieber 12 abgeschlossen werden, die in die Auslaufschächte des Vorratsbehälters 7 eingreifen. Der Vorratsbehälter 7 ist vollkommen frei aufgehängt, so daß es keine festen, insbesondere starren Verbindungen mit dem Maschinengestell 3, 4 gibt ; er ist an beiden Seiten in den Tragsäulen 6 in senkrechter Richtung leichtgängig geführt und zwar mit am Vorratsbehälter unten befestigten Kugellagern 13 und oben mit Hilfe eines etwa in der Mitte des Vorratsbehälters 7 befestigten Führungsringes 14, der an einem am oberen Ende der Tragsäule 6 ausgebildeten Zapfen 15 auf und ab gleiten kann. Dabei dient die obere Stirnfläche 14a der Tragsäule 6 als Anschlag für die Vertikalbewegung des Vorratsbehälters 7 bei auf die Sämaschine einwirkenden Stößen. Sowohl der Führungsring 14 als auch ein Bolzen 17 sind an einer Querschiene 16 befestigt, die im oberen Bereich an den Seitenflächen des Vorratsbehälters 7 angebracht ist. Am freien Ende des Kragträgers 5 ist über dem Vorratsbehälter 7 in der Ebene seines Schwerpunktes eine Haltelasche 18 mit einem Aufnahmebolzen 19 angebracht, an dem ein Halteglied 20 in Form eines allseitig beweglichen Tragseiles befestigt ist, das mit seinem unteren Ende an dem Bolzen 17 verankert ist. An den Ober- und Unterflächen der beiden Kragträger 5 sind Dehnungsmeßstreifen 21 geklebt, die als Widerstände derart in die Zweige von Meßbrücken geschaltet sind, daß sich ihre Widerstandsveränderungen bei der Durchbiegung des Kragträgers 5 aufgrund der daran aufgehängten Last bezüglich der Brückenausgangsspannung addieren, weil in der Brücke benachbarte Widerstände auf gegenüberliegenden Flächen und gegenübergeschaltete Widerstände auf derselben Meßkörperseite aufgeklebt werden. Die Dehnungsmeßstreifen 21 haben also die Funktion eines Meßwertgebers für das an dem Halteglied 20 angreifende Gewicht des Vorratsbehälters 7. Die elektrische Ausgangsgröße der Meßbrücke wird nach der in Fig. 7 gezeigten Blockschaltung wegen der im Bereich oft auftretenden Erschütterungen und Stöße zunächst zur Glättung bzw. Dämpfung einem RC-Glied, dann einem Verstärker mit Rückkopplung, einem Abgleicher für die beiden Meßbrücken und einem Operationsverstärker mit einer Justiervorrichtung für die Einstellung des nachfolgenden Anzeigeinstrumentes auf « Null » bei leerem Vorratsbehälter, zugeführt. Bei leerem Vorratsbehälter 7 zeigt das Anzeigeinstrument, das zweckmäßigerweise im Blickfeld des Traktorfahres angeordnet ist und in kg, kp oder Liter geeicht sein kann, « Null » an. Der Einfluß des Gewichts der Antriebsvorrichtung für den Dosiermechanismus, der wesentlicher Bestandteil der Sä- oder Sprühmaschinen ist, auf den frei aufgehängten Vorratsbehälter und damit auch auf die Meßvorrichtung wird zweckmäßigerweise dadurch vermieden, daß Kraftübertragungsmittel verwendet werden, die keine mechanischen und gewichtsverfälschenden Kräfte auf den Vorratsbehälter ausüben, wie z. B. Hydraulikantrieb mit flexiblen Zuleitungen, biegsame Wellen, Kardanoder Gelenkgetriebe. Auch an den Seitenflächen des Kragträgers 5 können erforderlichenfalls Dehnungsmeßstreifen befestigt sein, um Störgrößen zu kompensieren, wie Dehnungen der Tragkonstruktion aufgrund von Temperatureinflüssen oder Störgrößen infolge von Fahrtbeschleunigungskräften. Damit das Tragseil 20 in jedem Betriebszustand gespannt ist, insbesondere bei geringer Füllung des Behälters oder bei Stößen, wird der Behälter 7 mit Hilfe von Zugfedern 22 durch eine nach unten gerichtete Kraftkomponente vorbelastet. Um bei zu hoher dynamischer Krafteinwirkung auf die Dehnungsmeßstreifen ihre Beschädigung zu verhindern und auch um eine Überschreitung ihres linearen Widerstandsbereiches zu verhindern, ist die senkrechte Bewegung des Vorratsbehälters 7 durch die oben näher beschriebenen Anschläge 14, 14a begrenzt.

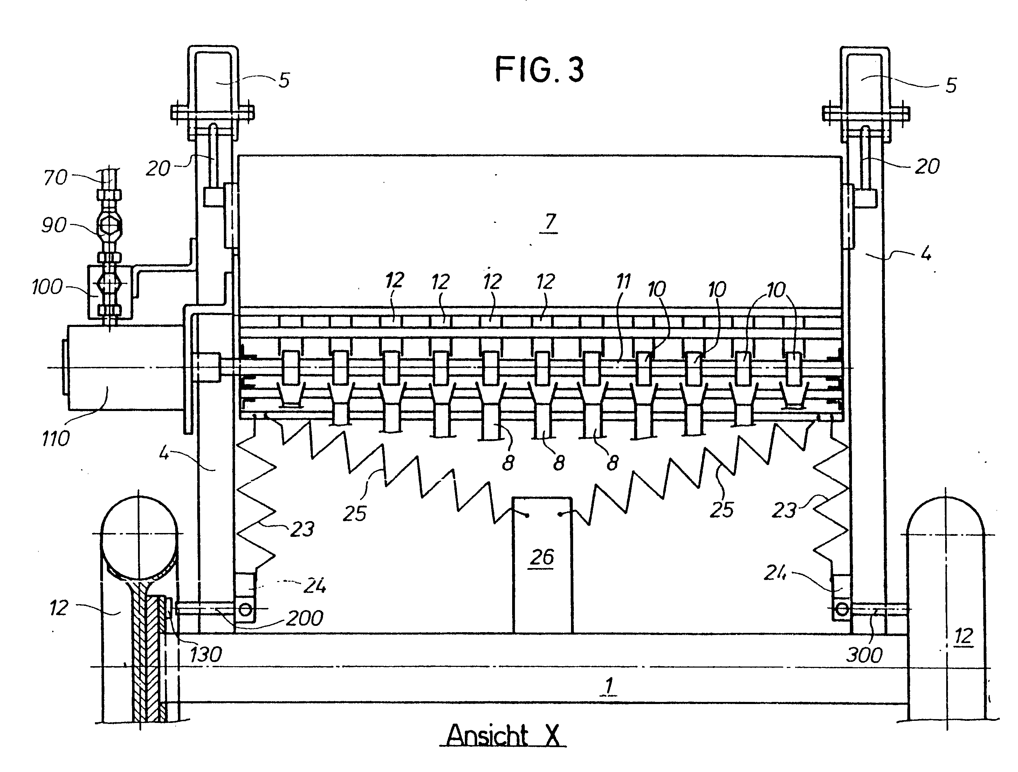

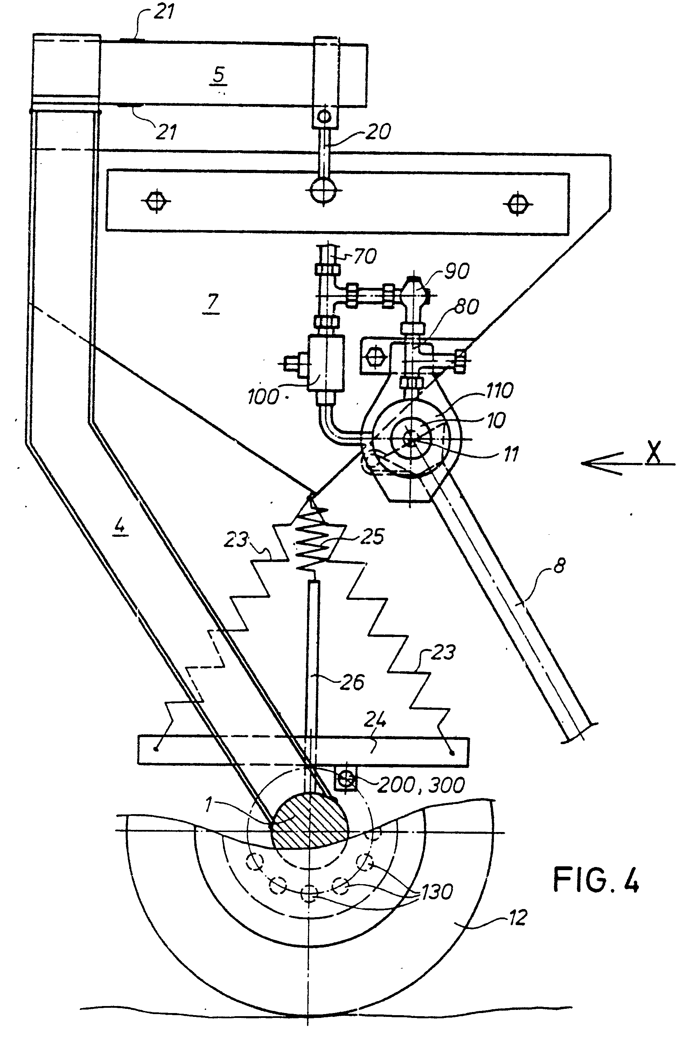

Gemäß den Figuren 3 und 4, in denen der besseren Übersichtlichkeit wegen Teile mit gleicher Funktion wie in den Figuren 1 und 2 mit denselben Bezugszahlen versehen sind, ist anstelle der starren Führung des Vorratsbehälters durch die oben geschilderte Tragsäule 6 eine elastische Federführung vorgesehen. Zu diesem Zwecke sind an jeder Maschinenseite je ein schräg verlaufendes Paar Zugfedern 23 angebracht, die mit ihrem unteren Ende an waagerechten, am Maschinengestell befestigten Traversen 24, und mit ihren oberen Enden an den unteren Seitenteilen des Vorratsbehälters 7 verankert sind. Ein weiteres diagonal zur Maschinenmitte verlaufendes Zugfederpaar 25 ist einerseits an einem in der Mitte der Achse 1 befestigten Halter 26 und andererseits ebenfalls an den beiden unteren Außenseiten des Vorratsbehälters 7 verankert. Diese Federpaare 23 und 25 fixieren den Vorratsbehälter 7 an seinem unteren Bereich in seiner Sollage, während er im oberen Bereich durch die allseitig beweglichen Halteglieder 20, die in der Schwerpunktebene angreifen, in seiner Arbeitslage gehalten wird. Auch bei dieser Ausführungsform besteht keine feste und starre Verbindung zwischen dem Vorratsbehälter 7 und dem Maschinentrag- und -gestellteilen. Auch hier wird die nach unten gerichtete Vorbelastung des Behälters 7 durch die Zugfederpaare 23 und 25 ausgeübt, so daß das Halteglied 20 stets unter Zugspannung steht und das im Vorratsbehälter befindliche Saatgut als Zugkraft auf die Kragträger 5 und damit auch auf die Dehnungsmeßstreifen 21 als elektrische Meßwertgeber überträgt.

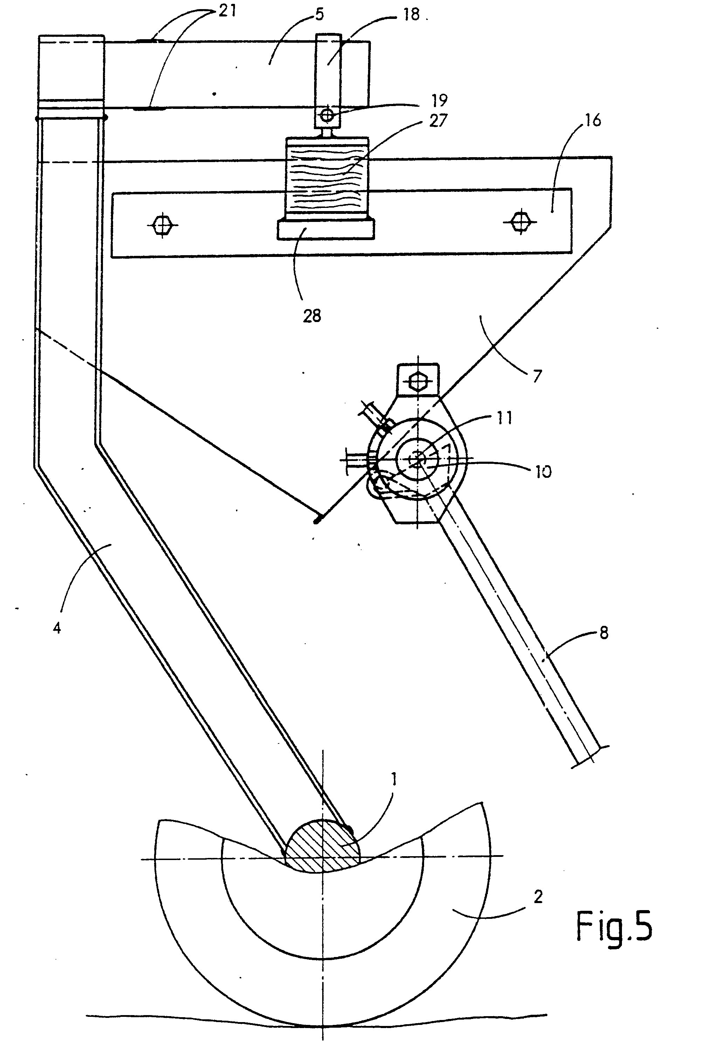

Gemäß Figur 5 ist der Vorratsbehälter 7 mit Hilfe von Gummifederelementen 27, die auch unter dem Namen Schwingmetall bekannt sind, an den beiden Kragträgern 5 allseitig beweglich aufgehängt. Zu diesem Zwecke sind an den beiden seitlichen Querschienen 16 eine Lasche 28 befestigt, mit der das Gummifederelement 27 fest verbunden ist. Die in dieser Figur nicht dargestellte elastische Fixierung des Behälters 7 kann ggf. nach der in Fig. 4 gezeigten Art vorgenommen werden.

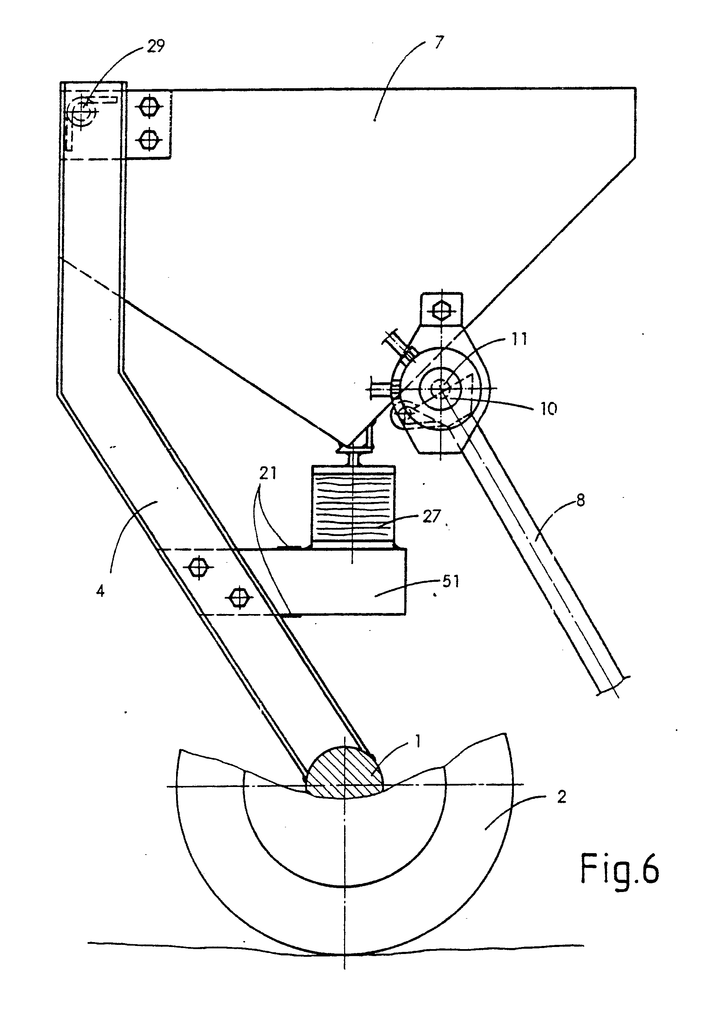

Gemäß Figur 6 stützt sich der Vorratsbehälter 7 in seiner Schwerpunktebene entweder in der Mitte oder an seinen unteren Außenkanten auf Gummifederelemente 27 ab, die auf den nach unten verlegten Kragträgern 51 aufsitzt. Die nachgebend bewegliche Führung des Vorratsbehälters wird in diesem Ausführungsbeispiel durch ein am oberen Ende der Tragstrebe 4 vorgesehenes Gelenk 29 bewirkt, das zusammen mit dem Gummifederelement 27 eine Auf- und Abbewegung um die Gelenkachse 29 ermöglicht. Die Gummifederelemente wirken auch als Dämpfungseinrichtung, damit die beim Betrieb möglicherweise auftretenden Erschütterungen oder Stöße keine unerwünschten Schwingungen des Vorratsbehälters 7 auslösen.

In Fig. 7 ist die elektrische Meßschaltung anhand eines vereinfachten Blockschaltbildes dargestellt. Die auf dem Kragträger 5 befestigten Dehnungsmeßstreifen sind als Meßwertgeber in Form von veränderbaren Widerständen 21 in sinngemäßer Weise in die Zweige einer Gleichstrommeßbrücke 30 geschaltet. Dabei sind die auf der Ober- und Unterseite des Kragträgers 5 angebrachten Dehnungsmeßstreifen derart angeordnet, daß sie bei Belastung des Kragträgers 5 ihre Widerstandswerte in dem Sinne verändern, daß sie ihre Wirkung in der Brücke summieren. Damit sie sich bezüglich ihrer Wirkung in der Brücke nicht aufheben, müssen in der Brücke benachbarte Widerstände bei Belastung des Kragträgers 5, in entgegengesetzter Weise beansprucht werden und in der Brücke gegenüberliegende gleichsinnig. So können sie auch alle Dehnungskräfte, die gleichmäßig auf die Ober- und Unterseite einwirken, wie z. B. Querbeschleunigungen bei Kurvenfahrten, Seitenstöße durch Abrutschen am Hang oder auch Veränderungen durch Wärmedehnung, vollständig kompensieren. Derartige Krafteinwirkungen verformen die Ober- und Unterseite des Kragträgers gleichmäßig und heben sich daher im Spannungsgefälle innerhalb der Meßbrücke auf, so daß sie die Gewichtsanzeige nicht verfälschen können. Das gleiche gilt für die Brems- und Anfahrbeschleunigung, deren Kräfte die Vorder- und Rückseite der Meßkörper stauchen bzw., dehnen, jedoch die Ober- und Unterseite nicht meßrelevant beeinflussen. Möglich sind auch andere Klebemuster der Dehnungsmeßstreifen auf dem Kragbalkenmeßkörper, z. B. auf den Flanken, wobei Nachbarwiderstände in der Brücke einmal am oberen und einmal am unteren Rand aufgeklebt werden, wegen der notwendigen entgegengesetzten Beanspruchung, und gegenübergeschaltete Widerstände einmal auf der Vorderflanke und einmal auf der Rückflanke befestigt werden, damit sie die dann entgegengesetzt wirkende Beanspruchung durch Beschleunigungen in Fahrtrichtung kompensieren. Anstelle von Kragbalken-Meßkörpern können auch Torsionsstäbe verwendet werden, mit einem Hebelarm, an dem der Behälter hängt oder auf dem er steht. Die Dehnungsmeßstreifen müssen dann in Spirallinien mit 45° Steigung aufgeklebt sein. Streifen mit entgegengesetztem Wirkungsvorzeichen müssen auf auf- bzw. absteigenden Spirallinien sitzen. Gleichfalls können anstelle von Kragbalken auch Zugbalken oder Stauchbalken verwendet werden. Hier müssen entgegengesetzt in der Brücke wirkende Widerstände einmal in Längs- und einmal in Querrichtung geklebt werden. Wegen der unvermeidbaren Kräfte durch Fahrbeschleunigung und Erschütterungen ist der dynamische Anteil der auf den Meßwertgeber einwirkenden Kräfte aus den Bewegungen des Vorratsbehälters 7 größer als der statische Anteil. Deshalb wird die aus der Meßgröße abgeleitete Spannung zunächst in einem RC-Glied als Tiefpaß 31 gefiltert bzw. gedämpft und in ihm wie in dem nachfolgenden Einzelverstärker 32 entzerrt. Die Meßwerte aus den beiden Meßbrücken 30 werden in dem anschließenden Abgleicher 33 angepaßt und über den Operationsverstärker 34 einem Analog- oder Digitalanzeiger 35 zugeführt. Mit einem Abgleichwiderstand kann die Anzeige des Meßinstrumentes 35, das beispielsweise in kg, kp oder in Liter geeicht sein kann, derart justiert werden, daß es bei leerem Vorratsbehälter 7 eine Meßgröße « Null » anzeigt. Die Speisung der Meßbrücke 30 und der übrigen Schaltungsteile erfolgt aus dem Bordnetz des Traktors. Zu diesem Zwecke wird die dort üblicherweise vorliegende Arbeitsspannung von 12 V in bekannter Weise mit Hilfe von elektrischen oder elektronischen Schaltelementen auf beispielsweise 5 V stabilisiert. An der Felge eines Laufrades 12 oder an den Felgen mehrerer Laufräder 12 sind am Umfang Dauermagnete 130 gleichmäßig verteilt, die bei Drehung der Laufräder 12 in den Reedschaltern 200, 300 elektrische Impulse erzeugen. Diese Impulse und die aus den Dehnungsmeßstreifen 21 sich ergebenden elektrischen Spannungen werden in einer nachfolgend noch zu beschreibenden Dosier-Steuerschaltung in eine elektrische Größe umgesetzt, mit welcher ein Gleichstrom-Steuerventil 100 beaufschlagt wird. Die Energiezufuhr für den hydraulischen Dosierantrieb kommt aus der Hydraulikpumpe des Traktors. Über den Einlaß 70 und einen Mengenteiler 90, der den schwankenden Druck der Hydraulikpumpe bei unterschiedlichen Motordrehzahlen des Traktors ausgleicht, läuft die Energiezufuhr über das elektrisch beaufschlagte Gleichstrom-Steuerventil 100 zu einem Ölmotor 110 und von dort wieder zurück durch die Rückflußleitung 80 zur Hydraulikpumpe des Traktors. Der Ölmotor 110 treibt den Dosierantrieb an, der in bekannter Weise beispielsweise aus auf einer Antriebswelle 11 angeordneten Dosiernockenrädern 10 besteht. Die Dosierräder 10 können durch Schieber 12 abgeschlossen werden, die in die Ausbringungsrohre 8 des Vorratsbehälters 7 eingreifen.

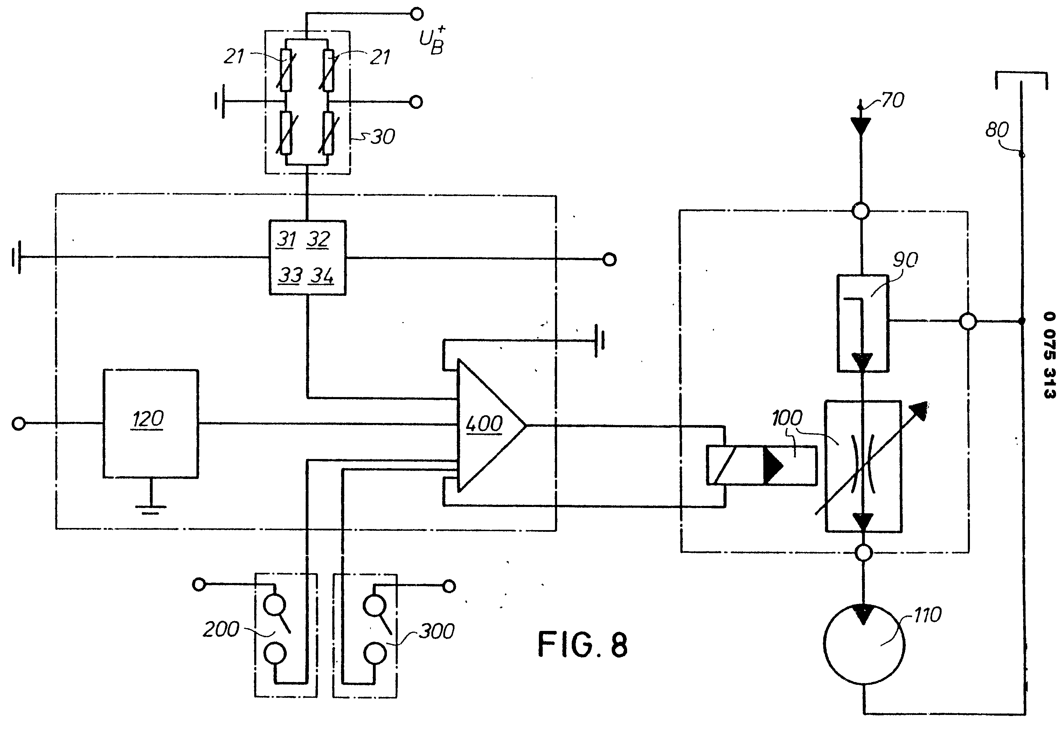

Fig. 8 zeigt die Schaltung der Dosier-Steuerschaltung. Einem Mikroprozessor 400 wird auf seiner Eingangsseite über die Eingabestation 120 der Sollwert der Dosiermenge des Kultiviergutes beispielsweise über eine Tastatur eingegeben. Über die Reedschalter 200, 300 neben den beiden Laufrädern gelangen in Abhängigkeit von der Umdrehungsgeschwindigkeit der Laufräder Spannungsimpulse zu weiteren Eingängen des Mikroprozessors 400. Durch die Anordnung auf beiden Seiten können die unterschiedlichen Umdrehungsgeschwindigkeiten der Laufräder beim Kurvenfahren ausgeglichen werden. Über das bereits zu Fig. 3 beschriebene Wiegesystem 30 und das diesem nachgeschaltete Filter bzw. Dämpfungsglied 31, den Einzelverstärker 32, den Abgleicher 33 und den Operationsverstärker 34 liegt am Mikroprozessor 400 außerdem ein der jeweiligen Kultiviergutmenge im Vorratsbehälter analoges Spannungssignal an. Im Mikroprozessor 400 werden in bestimmten Intervallen von den Reedschaltern 200 und 300 Impulse abgerufen, gleichzeitig die Gewichtsabnahme zur bearbeiteten landwirtschaftlichen Fläche ergibt sich bei gegebenem Umfang der Laufräder und gegebener Maschinenarbeitsbreite in einfacher Weise aus der Anzahl der Impulse aus den Reedschaltern 200, 300 pro Intervall. Der so im Mikroprozessor 400 ermittelte Quotient aus ausgebrachter Menge Kultiviergutes und bearbeiteter landwirtschaftlicher Fläche wird im Mikroprozessor 400 mit dem eingegebenen Sollwert verglichen. Unterschiede bei diesem Vergleich werden auf der Ausgangsseite des Mikroprozessors 400 in ein elektrisches Signal umgesetzt, welches auf das Gleichstrom-Steuerventil 100 regelnd einwirkt und von dort zum Eingang des Mikroprozessors 400 rückgekoppelt ist. Diese Umsetzung wird in einer Wirkungskurve im Mikroprozessor 400 gespeichert und während der Ausbringung des Kultiviergutes laufend anhand der tatsächlich auftretenden Impulszahl — Dosiermengenstärke — Wertpaare korrigiert und dem Sollwert angenähert. Im Mikroprozessor sind mehrere Wirkungskurven gespeichert, die zu Beginn der Ausbringung des Kultiviergutes entsprechend ihrer Eignung für das jeweilige, auszubringende Kultiviergut über die Eingabestation 120 angewählt werden können. Ebenso angewählt werden kann auch ein Testlauf vor der Arbeit im Stand. Dabei werden unterschiedliche Stromstärken auf dem Gleichstromsteuerventil 100 während bestimmter Zeitintervalle die Dosiermengen ermittelt, indem nach jedem Testzeitintervall die Restmenge im Vorratsbehälter über den Druckaufnahmer 30 ausgewogen und so die ausgebrachte Mengendifferenz errechnet wird. Die Testwertepaare werden zur Verbesserung der Wirkungskurve gespeichert. Bei Abweichungen über ein bestimmtes Maß zwischen dem Sollwert und dem Istwert der ausgebrachten Kultiviermenge während der Arbeit erscheint eine Warnanzeige. Die Wirkungskurve ist für eine bestimmte Fahrgeschwindigkeit, d. h. für eine bestimmte Impulsfrequenz aus den Reedschaltern 200 und 300 ausgelegt. Frequenzabweichungen werden vom Mikroprozessor 400 in proportionale Änderungen der Arbeitsgeschwindigkeit des Dosiermechanismus umgesetzt. Die Energiezufuhr für den hydraulischen Dosierantrieb kommt aus der Hydraulikpumpe des Traktors und läuft über den Einlaß 70 und einen Mengenverteiler 90, der den schwankenden Druck der Pumpe bei unterschiedlichen Traktormotordrehzahlen stabilisiert, über das elektrisch beaufschlagte Gleichstrom-Steuerventil 100 und einen Ölmotor 110 und zurück durch den Rückfluß 80 in den Traktorvorratstank. Der Ölmotor 110 treibt den Dosiermechanismus an, der aus Dosierrädern 10 auf der Dosierräderantriebswelle 11 besteht. Die Energieversorgung für die elektrische bzw. elektronische Steuerung wird aus dem Bordnetz des Traktors abgezweigt.

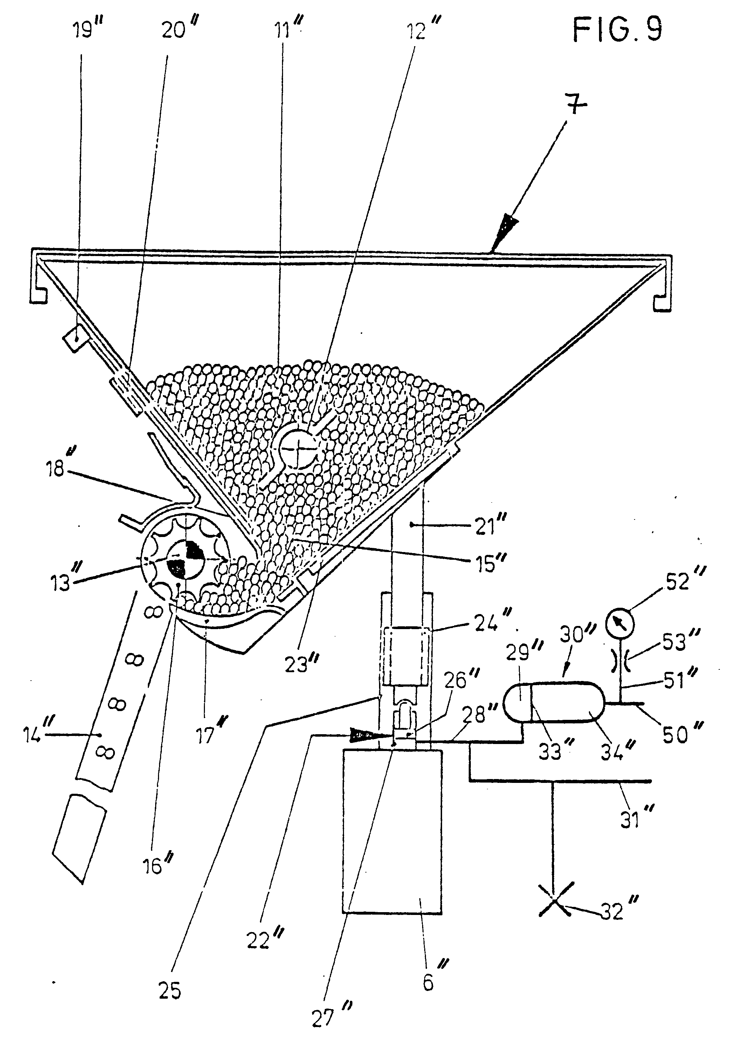

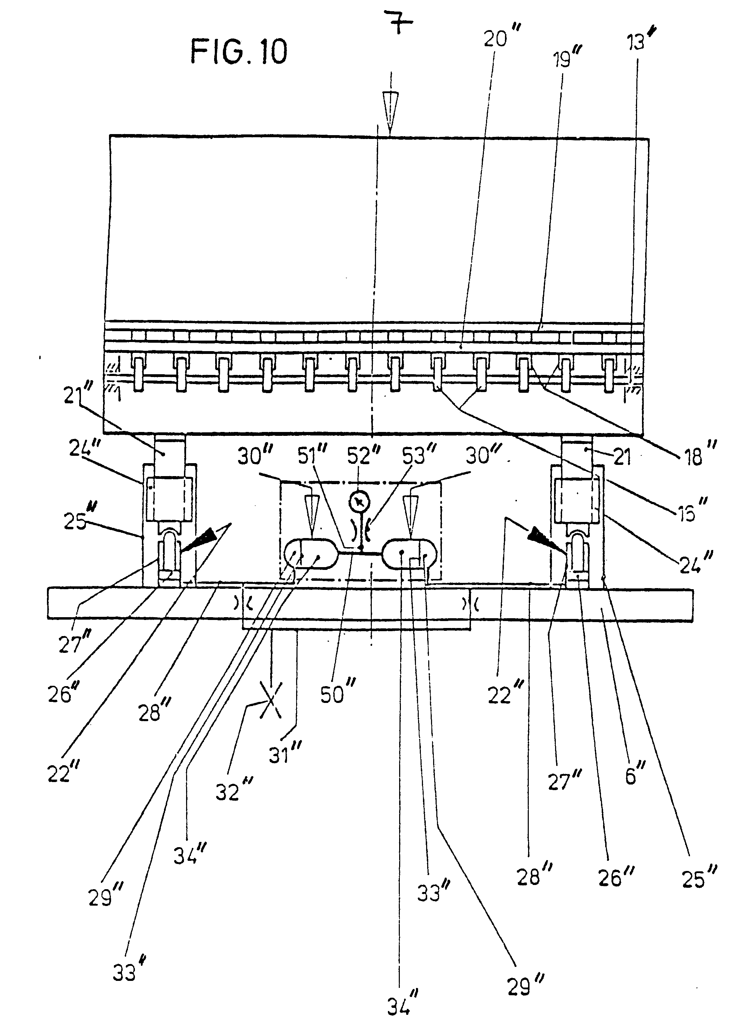

In den Figuren 9 und 10 ist mit der Bezugszahl 7 ein von oben zugänglicher Saatkasten mit üblicher V-förmiger Querschnittsform zur Aufnahme des Saatgutes 11" bezeichnet, der z. B. Bestandteil einer Drillmaschine ist. Diese Drillmaschine kann entweder über eine sogenannte Aushebevorrichtung (nicht gezeigt) an einen Schlepper angebaut sein oder ein eigenes Fahrgestell aufweisen. Durch den Saatkasten 7 erstreckt sich in Längsrichtung eine Rührwelle 12" für das Saatgut 11", die von einem nicht gezeigten Getriebe am einen Ende des Saatkastens angetrieben wird. Dieses Getriebe treibt auch eine Welle 13", auf der in seitlichem Abstand voneinander, jeweils gegenüber einem Saatrohr 14" und einer Öffnung 15" im Boden des Saatkastens 7 Säräder 16" befestigt sind, die an ihrem Umfang Nocken aufweisen und das Saatgut 11" in dosierten Mengen den Saatrohren 14" zuführen. Die Säräder 16" bilden somit gewissermaßen Schleusen für das Saatgut 11". Bei rotierender Welle 13" gelangt das Saatgut 11" zwischen den Nocken jedes Särades 16" und einer Bodenklappe 17" hindurch in die Saatrohre 14". Von dem Saatkasten 7 erstrecken sich eine Reihe solcher Saatrohre 14" nach unten, über welche das Saatgut 11" in seitlich gleichmäßig beabstandeten Reihen in das Erdreich eingebracht wird. Die Öffnungen 15" im Boden des Saatkastens 7 sind durch einzelne Schieber 18" verschließbar, die über eine gemeinsame Bedienungsstange 19" betätigt werden können. Die Schieber 18" sind in einer gemeinsamen spangenförmigen Halterung 20" verschieblich gelagert.

Der Saatkasten 7 ist im Ausführungsbeispiel über Stützen 21" auf zwei, hydropneumatischen Federn 22" aufgelagert. Im einzelnen sind die oberen Enden der Stützen 21" Saatkastenkonsolen 23" befestigt., die den Saatkasten 7 tragen. Ferner sind die Stützen 21" mittels kolbenförmiger Erweiterungen 24" in Führungsrohren 25" vertikal verschieblich geführt. Die Führungsrohre 25" sind mit ihren unteren Enden an einem tragenden Teil 6" des Drillmaschinen-Fahrgestells befestigt. Die hydropneumatischen Federn 22" sind innerhalb dieser Führungsrohre 25" angeordnet, und sie weisen im einzelnen einen Kolben 26" auf, der in einem Zylinder 27" läuft, welcher gleichfalls an dem Teil 6" des Drillmaschinen-Fahrgestells befestigt ist. Wie aus den Zeichnungen ersichtlich ist, ist das untere Ende jeder Stütze 21" unmittelbar auf einem nach oben ragenden Fortsatz des Kolbens 26" aufgelagert.

Die Kolben 26" können durch den Druck einer Hydraulikflüssigkeit nach oben vorgespannt werden. Zu diesem Zweck ist jeder der beiden Zylinder 27" über eine Hydraulikleitung 28" mit einem Hydraulikabschnitt 29" eines Druckbehälters 30" verbunden. Eine weitere Hydraulikleitung 31" verbindet die Hydraulikleitungen 28" miteinander, und diese Hydraulikleitung 31" enthält einen bei 32" schematisch angedeuteten Anschluß zum Hydrauliksystem des die Drillmaschine ziehenden Schleppers. Wie aus Fig. 10 hervorgeht, ist jedem der beiden Zylinder 27" ein Druckbehälter 30" zugeordnet, und jeder Druckbehälter 30" ist durch eine elastische Trennwand 33" in den bereits erwähnten Hydraulikabschnitt 29" und einen Gasdruckabschnitt 34" unterteilt.

Die Gasdruckabschnitte 34" der zwei Druckbehälter 30" sind durch eine Rohleitung 50" relativ engen lichten Querschnitts untereinander verbunden. Über eine weitere Rohrleitung 51" ist ein Manometer 52" an der Rohrleitung 50" angeschlossen. In die Rohrleitung 51" ist vor dem Manometer 52" eines Drossel 53" eingebaut. Die Skala des Manometers 52" ist für eine Messung des Gewichts des des Saatgutes 11" im Saatkasten 7 entsprechend geeicht.

Bei laufendem Schlepper-Motor wird über den Anschluß 32" die Hydraulikflüssigkeit in den Rohrleitungen 31", 28" den Hydraulikabschnitten 29" und den hydropneumatischen Federn 22" mit Druck beaufschlagt, so daß die Kolben 26" in eine obere Endstellung vorgespannt sind. In diesem Zustand zeigt das Manometer 52" den Wert Null an. Wird nun in den Saatkasten 7 Saatgut 11" eingefüllt, bewirkt dessen Gewicht über die Hydraulikflüssigkeit und elastischen Trennwände 33" eine Druckerhöhung des Gases in den Gasdruckabschnitten 34" der beiden Druckbehälter 30" sowie in den Rohrleitungen 50" und 51", wodurch ein entsprechender Ausschlag des Manometers 52" erzeugt wird, der eine exakte Anzeige des Gewichts des eingefüllten Saatgutes liefert. Mit anderen Worten, auf der nach Gewichtseinheiten geeichten Skala des Manometers 52" kann das jeweilige Gewicht des Saatkasteninhalts beim Einfüllvorgang und anschließend während der Arbeit der Drillmaschine stetig abgelesen werden. Die dem Manometer 52" vorgeschaltete Drossel 53" dämpft plötzliche Druckerhöhungen und -abfälle, bedingt z. B. durch Erschütterungen der Drillmaschine oder durch Beschleunigungs- oder Verzögerungskräfte während der Arbeit.

Auf obige Weise kann vorteilhaft das Gewicht der ausgebrachten Körnermenge stetig kontrolliert werden und der Bediener kann verhältnismäßig einfach ermitteln, ob die Ist-Werte im Soll-Bereich liegen und die angestrebte hohe Sä-Genauigkeit und damit eine optimale Pflanzendichte erreicht werden. In Abhängigkeit von der Gewichtsanzeige des Manometers 52" kann nämlich der Saatgutausfluß aus dem Saatkasten 7 geregelt werden, entweder durch entsprechende Betätigung der Schieber 18" und-/oder Änderung der Drehzahl der Welle 13" mit den Särädern 16".

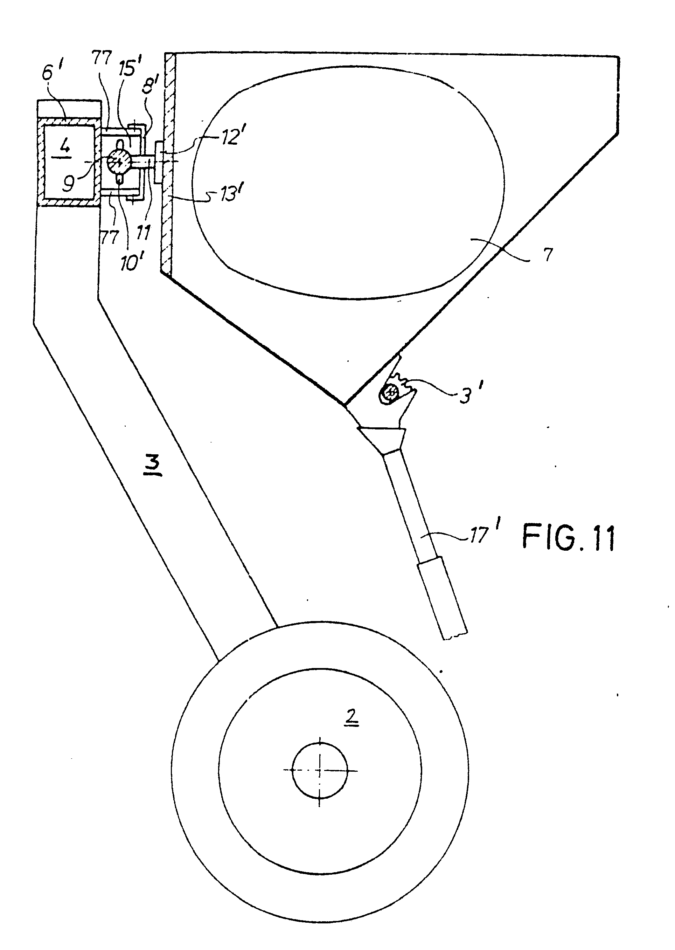

Fig. 11 zeigt einen Holm 4, an dessen unterem Ende ein Laufrad 2 montiert ist. Zwei derartige Holme 3 sind an ihrem den Laufrädern 2 gegenüberliegenden Ende Mittels eines Trägers 4 miteinander starr verbunden. Am als verwindungssteifes Widerlager dienenden Träger 4 sind mit Klammern 6' paarweise Halteplatten 77 befestigt, welche zwischen sich Spannfutter 15' für die drehfeste Lagerung der Enden der einzelnen, axial nebeneinander angeordneten Torsionswellen 9' aufnehmen. Damit eine sichere Lagerung der Enden der Torsionswellen 9' gegeben ist, sind die Enden der Torsionswellen 9' mit Nasen 10' ausgebildet, die vom Spannfutter 15' fest gehalten werden. Jedes Spannfutter 15' ist durch eine Abschlußplatte 8' abgeschlossen. Von jeder Torsionswelle 9' stehen senkrecht Stege 11' weg, welche über Sockel 12' mit den Konsolen 13' des Vorratsbehälters 7 mechanisch fest verbunden sind. Die starre Aufhängung des Vorratsbehälters 7 wird noch dadurch optimiert, daß die Konsolen 13' zu dem Vorratsbehälter 7 in seinem Inneren versteifenden Spanten ausgestaltet sein können, und die Stege 11' mit den Spanten fluchten. In dieser Figur sind noch Dosierräder 3' und Ausbringungsrohre 17' angedeutet, über welche das im Vorratsbehälter 7 befindliche Kultiviergut ausgebracht wird. Der Vorratsbehälter 7 ist starr und fest am Gestell des landwirtschaftlichen Gerätes befestigt, wobei eine Reduzierung der Hebelmomente senkrecht zur Hauptzugrichtung besonders dann erreicht wird, wenn möglichst kurz gehaltene, als Stege 11' ausgebildete Verbindungsstücke in einer Ebene liegen, welche horizontal durch den Schwerpunkt des gefüllten Vorratsbehälters 7 verlaufen. Durch derartige, kurze und breit gehaltene Verbindungsstücke haben im Betrieb auftretende Querkräfte keinen Einfluß auf den Meßformkörper in Form der Torsionswellen 9' und damit auf das sich aus den Dehnungsmeßstreifen ergebenden Meßergebnis. Durch die starre, feste Befestigung des Vorratsbehälters 7 wirken auf die vorzugsweise mehrteilige Torsionswelle 9' nur senkrechte, insbesondere das Gewicht des im Vorratsbehälter 7 befindlichen Kultiviergutes versinnbildlichenden Kräfte ein, die die auf den Torsionswellen 9' befestigten Dehnungsmeßstreifen im Sinne einer Gewichtsbestimmung beeinflussen. Die Verarbeitung und Verwertung der aus den Dehnungsmeßstreifen sich ergebenden analogen elektrischen Daten erfolgt so wie zuvor beschrieben. Der Träger 4 bildet mit den beiden seitlichen Holmen 3 baulich eine Einheit, wobei an den unteren Enden der Holme 3 die in dieser Figur nicht dargestellen Laufräder gelagert sind. Die am Träger 4 zwischen Halteplatten 77 befindlichen Spannfutter 15' sind durch Abschlußplatten 8' lokalisiert. Diese Spannfutter 15' fassen die Enden der Torsionswellen 9'. Zwischen den drehfesten Fassungen 77, 8', 15' der Torsionswellen 9' und den diesen benachbarten Stegen 11' sind auf den Torsionswellen 9' die Dehnungsmeßstreifen 21 in einem Winkel von 45° zur Achse der Torsionswellen 9' festgeklebt. Durch die axiale Lagerung der Torsionswellen 9 an den seitlich äußeren Fassungen 77, 8', 15' mit federnden Schwingmetallen können langperiodische Beschleunigungen quer zur Torsionswirkungsebene mechanisch unterdrückt werden, während die höherfrequenten Fahr-Erschütterungen in Richtung der Torsionswirkungsebene elektrisch ausgefiltert, d. h. gedämpft werden. Die von den Torsionswellen 9' senkrecht wegstehenden kurzen Stege 11' sind mit Sockel 12' an den die Innenwand des Vorratsbehälters 7 versteifenden Spanten, mit denen sie fluchten, fest verbunden. Durch die langgestreckte Ausbildung des Vorratsbehälters 7 quer zur Fahrtrichtung ist sein Trägheitsmoment um die Achse in Fahrtrichtung größer. Auch sind die starren Verbindungen zwischen dem Vorratsbehälter 7 und den am Gerätegestell befindlichen starren Festpunkten möglichst kurz und breit gehalten, so daß Querkräfte keinen Einfluß auf die Torsionswellen 9' und damit auf die Dehnungsmeßstreifen 21 haben.

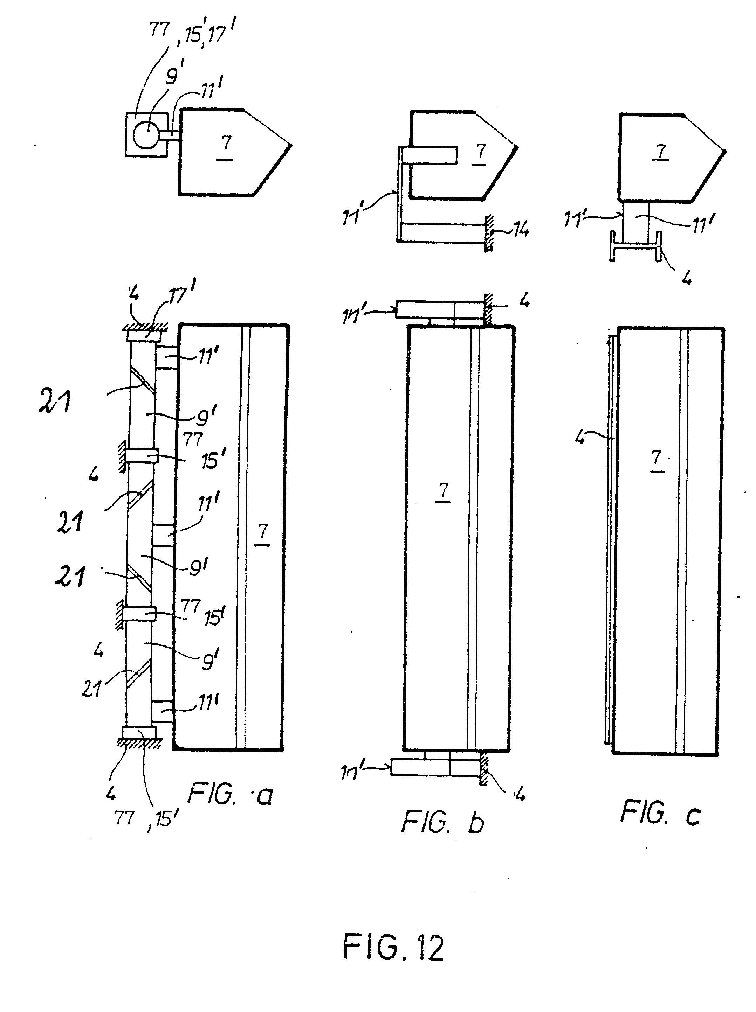

Figur 12a zeigt eine Meßvorrichtung, bei der die Dehnungsmeßstreifen 21 auf der mehrteiligen Torsionswelle 9' unter 45° angebracht sind. Die Torsionswelle 9' besteht aus mehreren Teilstücken, die zwischen in Halteplatten 77 befestigten Spannbacken 15' drehfest gelagert sind, wobei die Spannbacken 15' an ortsfesten Widerlagern 4 am Gerätegestell gehalten sind. Durch die Lagerung mindestens eines Endes der mehrteiligen Torsionswelle 9' in einem Schwingmetall 17' werden langperiodische Beschleunigungen in Richtung der Torsionswellenachse mechanisch unterdrückt. Der Vorratsbehälter 7 ist über kurze Stege 11' mit den Torsionswellenstücken 9' starr und mechanisch fest verbunden, wobei die ·Dehnungsmeßstreifen 21 im Bereich zwischen den Widerlagern 77, 15' und den Stegen 11' auf der Torsionswelle 9' befestigt sind.

Figur 12b zeigt eine andere Konstruktion einer erfindungsgemäßen Meßvorrichtung, bei der die kurzen, breiten Verbindungsstücke zum Gerätegestell 4 an den beiden seitlichen Stirnflächen des Vorratsbehälters 7 angeordnet und die Dehnungsmeßstreifen 16 an den beiden Verbindungsstücken festgeklebt sind.

Figur 12c zeigt einen Vorratsbehälter 7, der mittels kurzer, breiter Stege 11' an einem seitlich neben der Schwerpunktlinie unter dem Vorratsbehälter 7 verlaufenden Doppel-T-Träger 4 befestigt ist. Durch diese seitliche Versetzung ergibt sich eine vom Gewicht des im Vorratsbehälter 7 befindlichen Kultiviergutes abhängige Dehnung jedes Steges 11' und damit eine dem Gewicht proportionale Dehnung der an den Stegen 11' festgeklebten Dehnungsmeßstreifen 21.

**Patentansprüche**

1. Landwirtschaftliche Vorrichtung zum Ausbringen von flüssigem, pulverförmigem oder körnigem Kultiviergut, mit einem an einem Traggestell (3, 4) gelagerten Vorratsbehälter (7) zur Aufnahme des Kultiviergutes, dadurch gekennzeichnet, daß an dem Traggestell ein Kragträger (5) befestigt ist, an dem der Vorratsbehälter (7) mittels eines allseits beweglichen Haltegliedes (20) unter gleichzeitiger Führung in senkrechter Richtung aufgehängt ist, und daß zum Erfassen des Gewichtes des Vorratsbehälters (7) ein Meßfühler (21) zwischen Vorratsbehälter (7) und Traggestell (3, 4) angeordnet ist.

2. Landwirtschaftliche Vorrichtung nach Anspruch 1, dadurch gekennzeichnet, daß das Halteglied aus mindestens einem Tragseil (20) gebildet ist.

3. Landwirtschaftliche Vorrichtung nach Anspruch 1, dadurch gekennzeichnet, daß das Halteglied aus mindestens einem Gummifederelement (27) oder Gummifeder-Dämpfungselement gebildet ist.

4. Landwirtschaftliche Vorrichtung nach einem der Ansprüche 1 bis 3, dadurch gekennzeichnet, daß eine den Vorratsbehälter (7) nach unten zu ziehen versuchende Zugfedereinrichtung (22, 23, 25) vorgesehen ist.

5. Landwirtschaftliche Vorrichtung nach einem der Ansprüche 1 bis 4, dadurch gekennzeichnet, daß für die Führung des Vorratsbehälters (7) in senkrechter Richtung starre Führungen (13, 14, 15) vorgesehen sind.

6. Landwirtschaftliche Vorrichtung nach einem der Ansprüche 1 bis 4, dadurch gekennzeichnet, daß für die Führung des Vorratsbehälters (7) in senkrechter Richtung in entgegengesetzte Richtungen ziehende Zugfedern (23) vorgesehen sind.

7. Landwirtschaftliche Vorrichtung zum Ausbringen von flüssigem, pulverförmigem oder körnigem Kultiviergut mit einem an einem Traggestell (3, 4) gelagerten Vorratsbehälter (7) zur Aufnahme des Kultiviergutes, dadurch gekennzeichnet, daß an dem Traggestell (3, 4) ein Kragträger (51) befestigt ist, auf dem von unten her der Vorratsbehälter (7) mittels eines Haltegliedes (27) unter gleichzeitiger Führung in senkrechter Richtung abgestützt ist, und daß zum Erfassen des Gewichtes des Vorratsbehälters ein Meßfühler (21) zwischen Vorratsbehälter und Traggestell angeordnet ist.

8. Landwirtschaftliche Vorrichtung nach Anspruch 7, dadurch gekennzeichnet, daß das Halteelement aus mindestens einem Gummifederelement (27) oder Gummifeder-Dämpfungselement gebildet ist.

9. Landwirtschaftliche Vorrichtung nach Anspruch 7 oder 8, dadurch gekennzeichnet, daß für die Führung in senkrechter Richtung des Vorratsbehälters (7) ein Gelenk (29) vorgesehen ist, das oben am Vorratsbehälter (7) zwischen Vorratsbehälter und Traggestell (3, 4) wirksam ist.

10. Landwirtschaftliche Vorrichtung nach einem der Ansprüche 1 bis 9, dadurch gekennzeichnet, daß der Meßfühler zum Erfassen des Gewichtes des Vorratsbehälters (7) eine zwischen dem Halteglied (20) und dem Traggestell (3, 4) angeordnete elektrische Druckmeßdose ist.

11. Landwirtschaftliche Vorrichtung nach einem der Ansprüche 1 bis 9, dadurch gekennzeichnet, daß der Meßfühler zum Erfassen des Gewichtes des Vorratsbehälters einen am Kragträger (5, 51) angeordneten Dehnungsmeßstreifen umfaßt.

12. Landwirtschaftliche Vorrichtung zum Ausbringen von flüssigem, pulverförmigem oder körnigem Kultiviergut, mit einem an einem Traggestell (4) gelagerten Vorratsbehälter (7) zur Aufnahme des Kultiviergutes, dadurch gekennzeichnet, daß der Vorratsbehälter (7) über mindestens ein ihn starr mit dem Traggestell (4, 14) verbindenden Verbindungsstück (9' 11') außerhalb der Ebene seines Schwerpunktes abgestützt ist, und daß zum Erfassen des Gewichtes des Vorratsbehälters mindestens ein Dehnungsmeßstreifen am Verbindungsstück (9', 11') angeordnet ist.

13. Landwirtschaftliche Vorrichtung nach Anspruch 12, dadurch gekennzeichnet, daß das Widerstandsmoment des Verbindungsstückes (9', 11') in horizontaler Richtung um ein Vielfaches größer ist als in senkrechter Richtung.

14. Landwirtschaftliche Vorrichtung nach Anspruch 12 oder 13, dadurch gekennzeichnet, daß eine Vielzahl horizontal angeordneter Verbindungsstücke (11') den Vorratsbehälter (7) tragen.

15. Landwirtschaftliche Vorrichtung nach Anspruch 14, dadurch gekennzeichnet, daß die horizontal angeordneten Verbindungsstücke in Höhe des Behälterschwerpunktes sich befinden.

16. Landwirtschaftliche Vorrichtung nach einem der Ansprüche 12 bis 15, dadurch gekennzeichnet, daß das Verbindungsstück eine horizontal, quer zur Fahrtrichtung verlaufende Torsionswelle (9') und ein horizontal in Fahrtrichtung verlaufendes und an der Torsionswelle befestigtes ·Kupplungsteil aufweist, an dem der Vorratsbehälter aufgehängt ist, und daß der Dehnungsmeßstreifen (21) auf der Torsionswelle befestigt ist.

17. Landwirtschaftliche Vorrichtung nach Anspruch 16, dadurch gekennzeichnet, daß der Dehnungsmeßstreifen (21) im wesentlichen dem Verlauf der Dehnungsspannungslinien folgend in Schraubenlinien unter etwa 45° aufgeklebt ist.

18. Landwirtschaftliche Vorrichtung nach Anspruch 16 oder 17, dadurch gekennzeichnet, daß die Torsionswelle (9') aus mehreren axial nebeneinander angeordneten Teilstücken besteht, die an ihren Enden in Widerlagern (7', 8', 15') drehfest verspannt sind.

19. Landwirtschaftliche Vorrichtung nach einem der Ansprüche 11 bis 18, dadurch gekennzeichnet, daß der Dehnungsmeßstreifen (21) als veränderlicher Widerstand in einem Zweig einer Brückenschaltung liegt.

20. Landwirtschaftliche Vorrichtung nach Anspruch 19, dadurch gekennzeichnet, daß in mehreren Zweigen der an konstanter Spannung liegenden Brückenschaltung (30) Dehnungsmeßstreifen (21) liegen.

21. Landwirtschaftliche Vorrichtung nach Anspruch 19 oder 20, dadurch gekennzeichnet, daß die Ausgangsspannung der Brückenschaltung in einem Tiefpaß gefiltert bzw. gedämpft und nach Verstärkung einem Anzeigeinstrument (35) zugeführt wird.

22. Landwirtschaftliche Vorrichtung nach einem der Ansprüche 19 bis 21, dadurch gekennzeichnet, daß in der Brückenschaltung benachbart liegende Widerstände durch die Schwerkraft des Vorratsbehälters entgegengesetzt, und gegenübergeschaltete Widerstände gleichsinnig beansprucht sind.

23. Landwirtschaftliche Vorrichtung zum Ausbringen von flüssigem, pulverförmigem oder körnigem Kultiviergut, mit einem an einem Traggestell gelagerten Vorratsbehälter (7), dadurch gekennzeichnet, daß ein pneumatisches oder hydropneumatisches Federsystem (22", 28", 30", 31", 32", 50") zwischen Traggestell und Vorratsbehälter und im Federsystem ein als Meßfühler zur Erfassung des Gewichtes des Vorratsbehälters (7) dienender Druckfühler vorgesehen sind, wobei das Federsystem wenigstens zwei hydropneumatische Federn (22") und jede hydropneumatische Feder (22") eine Kolben-Zylindereinheit (26", 27") und einen Druckbehälter (30") aufweist, der durch eine elastische Trennwand (33") in einen Gasdruckabschnitt (34") und einen Hydraulikabschnitt (29") unterteilt ist, wobei der Hydraulikabschnitt (29") über eine Leitung mit der Kolben-Zylindereinheit (26", 27") und der Gasdruckabschnitt (34") über eine Drossel (53") mit dem Druckfühler (52") verbunden ist.

24. Landwirtschaftliche Vorrichtung nach einem der Ansprüche 1 bis 23, dadurch gekennzeichnet, daß der Meßfühler (21, 52) zur Erfassung des Gewichtes des Vorratsbehälters (7), eine Drehzahlmeßeinrichtung (200, 300) an den Laufrädern (2) und eine Eingabestation (120) für den Sollwert der auszubringenden Menge des Kultiviergutes mit ihren elektrischen Spannungen an der Eingangsseite eines Mikroprozesses (400) anliegen, der mit seinem Ausgangssignal über ein Steuerventil (100) einen Motor (110) steuert, der einen Dosierantrieb (10, 11) für das auszubringende Kultiviergut regelt.

25. Landwirtschaftliche Vorrichtung nach Anspruch 24, dadurch gekennzeichnet, daß der Meßfühler (21, 52'), die Drehzahlmeßvorrichtung (200, 300) und die Dosierantriebssteuerung mit dem Mikroprozessor (400) in einem Regelkreis zusammengeschaltet und mit der Eingabestation (120) verbunden sind, wobei die ausgebrachte Menge des Kultiviergutes, die bearbeitete Fläche und der eingegebene Sollwert für die auszubringende Menge des Kultiviergutes vom Mikroprozessor (400) in bestimmten Weg- und damit Flächenintervallen verglichen werden und das Ergebnis dieses Vergleichs auf der Ausgangsseite des Mikroprozessors (400) die Dosierantriebssteuerung derart regelt, daß der Istwert der ausgebrachten Menge des Kultiviergutes stets dem Sollwert angenähert ist.

26. Landwirtschaftliche Vorrichtung nach Anspruch 25, dadurch gekennzeichnet, daß die jeweiligen Istwerte mit der Gesamtweg- bzw. Flächensumme verglichen werden und damit mit steigenden Zahlenwerten zur Verbesserung der Genauigkeit des Vergleichs.

27. Landwirtschaftliche Vorrichtung nach Anspruch 24, dadurch gekennzeichnet, daß die Vergleichsabschnitte jeweils nach bestimmten, für die Meßgenauigkeit hinreichend großen Gewichtsintervallen begrenzt werden.

28. Landwirtschaftliche Vorrichtung nach Anspruch 24, dadurch gekennzeichnet, daß ein Meßverstärker vor dem Mikroprozessor und ein Ausgangswert-Verstärker nach dem Mikroprozessor auf unterschiedliche, jedoch stets genau gegenläufige Verstärkungsgrade steuerbar sind, um die Steuerbandbreite zu vergrößern und die Auflösung der digitalen Werte im unteren Bereich enger und im oberen Bereich weiter auseinanderzulegen.

29. Landwirtschaftliche Vorrichtung nach einem der Ansprüche 24 bis 28, dadurch gekennzeichnet, daß das mit dem Ausgangssignal des Mikroprozessors (400) beaufschlagte Steuerventil (100) ein Gleichstromventil ist, dessen Ausgangsseite zur Eingangsseite des Mikroprozessors (400) rückgekoppelt ist.

30. Landwirtschaftliche Vorrichtung nach einem der Ansprüche 24 bis 29, dadurch gekennzeichnet, daß zur Messung der Weg- und damit der Flächenintervalle elektromagnetische Impulsgeber (200, 300) vorgesehen sind.

31. Landwirtschaftliche Vorrichtung nach Anspruch 20, dadurch gekennzeichnet, daß die elektromagnetischen Impulsgeber aus an einem Laufrad (2) oder an mehreren Laufrädern (2) befestigten Dauermagnete (130) und ihnen am Traggestell (4, 24) gegenüberliegenden Reedschaltern (200, 300) bestehen.

32. Landwirtschaftliche Vorrichtung nach einem der Ansprüche 24 bis 31, dadurch gekennzeichnet, daß im Mikroprozessor (400) Wirkungskurven gespeichert sind, die entsprechend ihrer Eignung für das jeweilige auszubringende Kultiviergut über die Eingabestation (120) anwellbar sind.

## Claims

1. Agricultural apparatus for distributing liquid, pulverulent or granular cultivation material, comprissing a reservoir (7) mounted on a carrier frame (3, 4) and serving to hold the cultivation material, characterized in that on the carrier frame a cantilever beam (5) is fastened, on which the reservoir (7) is suspended by means of a holder (20) adapted to move in all directions and is at the same time guided in the vertical direction, and that for the purpose of determining the weight of the reservoir (7) a measuring sensor (21) is disposed between the reservoir (7) and the carrier frame (3, 4).

2. Agricultural apparatus according to Claim 1, characterized in that the holder is composed of at least one supporting rope (20).

3. Agricultural apparatus according to Claim 1, characterized in that the holder is composed of at least one rubber spring element (27) or rubber springdamper element.

4. Agricultural apparatus according to one of Claims 1 to 3, characterized in that a tension spring device (22, 23, 25) urging the reservoir (7) in the downward direction is provided.

5. Agricultural apparatus according to one of Claims 1 to 4, characterized in that rigid guides (13, 14, 15) are provided for guiding the reservoir (7) in the vertical direction.

6. Agricultural apparatus according to one of Claims 1 to 4, characterized in that tension springs acting in opposite directions are provided for guiding the reservoir (7) in the vertical direction.

7. Agricultural apparatus for distributing liquid, pulverulent or granular cultivation material, comprising a reservoir (7) mounted on a carrier frame (3, 4) and serving to hold the cultivation material, characterized in that on the carrier frame (3, 4) a cantilever beam (51) is fastened, on which the reservoir (7) is supported from below by means of a holder (27) and is at the same time guided in the vertical direction, and that for the purpose of determining the weight of the reservoir a measuring sensor (21) is disposed between the reservoir and the carrier frame.

8. Agricultural apparatus according to Claim 7, characterized in that the holder is composed of at least one rubber spring element (27) or rubber springdamper element.

9. Agricultural apparatus according to Claim 7 or 8, characterized in that for the purpose of guiding the reservoir (7) in the vertical direction a joint (29) is provided which acts at the top on the reservoir (7) between the latter and the carrier frame (3, 4).

10. Agricultural apparatus according to one of. Claims 1 to 9, characterized in that the measuring sensor for determining the weight of the reservoir (7) is an electric pressure pickup disposed between the holder (20) and the carrier frame (3, 4).

11. Agricultural apparatus according to one of Claims 1 to 9, characterized in that the measuring sensor for determining the weight of the reservoir comprises a wire strain gauge disposed on the cantilever beam (5, 51).

12. Agricultural apparatus for distributing liquid, pulverulent or granular cultivation material, comprising a reservoir (7) mounted on a carrier frame (4) and serving to hold the cultivation material, characterized in that the reservoir (7) is supported outside the plane of its centre of gravity by means of at least one connector (9', 11') rigidly connecting it to the carrier frame (4, 14), and that for the determination of the weight of the reservoir at least one wire strain gauge is provided on the connector (9', 11').

13. Agricultural apparatus according to Claim 12, characterized in that the moment of resistance of the connector (9', 11') in the horizontal direction is a multiple of that in the vertical direction.

14. Agricultural apparatus according to Claim 12 or 13, characterized in that a plurality of horizontally disposed connectors (11') carry the reservoir (7).

15. Agricultural apparatus according to Claim 14, characterized in that the horizontally disposed connectors are situated at the height of the centre of gravity of the container.

16. Agricultural apparatus according to one of Claims 12 to 15, characterized in that the connector comprises a torsion shaft (9') extending horizontally, transversely to the direction of travel, and a coupling part which extends horizontally in the direction of travel and is fastened to the torsion shaft, and on which the reservoir is suspended, and that the wire strain gauge (21) is fastened on the torsion shaft.

17. Agricultural apparatus according to Claim 16, characterized in that the wire strain gauge (21) is adhesively secured in helical lines at an angle of about 45° so as to follow substantially the path of the tensile stress lines.

18. Agricultural apparatus according to Claim 16 or 17, characterized in that the torsion shaft (9') consists of a plurality of axially juxtaposed portions which at their ends are clamped rotationally fast in abutments (7', 8', 15').

19. Agricultural apparatus according to one of Claims 11 to 18, characterized in that the wire strain gauge (21) is connected as a variable resistor in a branch of a bridge circuit.

20. Agricultural apparatus according to Claim 19, characterized in that wire strain gauges (21) are disposed in a plurality of branches of the bridge circuit (30) to which a constant voltage is applied.

21. Agricultural apparatus according to Claim 19 or 20, characterized in that the output voltage of the bridge circuit is filtered or damped in a lowpass filter and after amplification is fed to an indicator instrument (35).

22. Agricultural apparatus according to one of Claims 19 to 21, characterized in that neighbouring resistors in the bridge circuit are oppositely stressed by the gravitational force of the reservoir, and oppositely connected resistors are stressed in the same direction.

23. Agricultural apparatus for the distribution of liquid, pulverulent or granular cultivation material, comprising a reservoir (7) mounted on a carrier frame characterized in that a pneumatic or hydropneumatic spring system (22", 28", 30", 31", 32", 50") is provided between the carrier frame and the reservoir, and in the spring system a pressure sensor serving as measuring sensor for determining the weight of the reservoir is provided, while the spring system comprises at least two hydropneumatic springs (22") and each hydropneumatic spring (22") comprises a piston-cylinder unit (26", 27") and a pressure vessel (30") which is divided by a resilient partition (33") into a gas pressure portion (34") and a hydraulic portion (29"), the hydraulic portion (29") being connected by a pipe to the piston-cylinder unit (26", 27") and the gas pressure portion (34") being connected by way of a throttle (53") to the pressure sensor (52").

24. Agricultural apparatus according to one of Claims 1 to 23, characterized in that the measuring sensor (21, 52) for determining the weight of the reservoir (7), a rotational speed measuring device (200, 300) on the ground wheels (2), and an input station (120) for the desired value of the amount of cultivation material to be distributed are connected by their voltages to the input side of a microprocessor (400), the output signal of which controls, via a control valve (100), a motor (110) which regulates a metering drive (10, 11) for the cultivation material to be distributed.

25. Agricultural apparatus according to Claim 24, characterized in that the measuring sensor (21, 52'), the rotational speed measuring device (200, 300), and the metering drive control system are grouped together with the microprocessor (400) in a closed-loop control system and connected to the input station (120), while the amount of cultivation material distributed, the area covered, and the input desired value of the amount of cultivation material to be distributed are compared by the microprocessor (400) at determined intervals of travel and therefore or area, and the result of this comparison controls, on the output side of the microprocessor (400), the metering drive control system in such a manner that the actual value of the amount of cultivation material distributed is always close to the desired value.

26. Agricultural apparatus according to Claim 25, characterized in that the various actual values are compared with the total distance or area and thus with increasing numerical values in order to improve the accuracy of the comparison.

27. Agricultural apparatus according to Claim 24, characterized in that the comparison steps are in each case terminated after determined weight intervals which are sufficiently great for accuracy of measurement.

28. Agricultural apparatus according to Claim 24, characterized in that a measuring amplifier upstream of the microprocessor and an output value amplifier downstream of the microprocessor are adapted to be adjusted to different, but always exactly opposite degrees of amplification in order to widen the control band and to make the resolution of the digital values narrower in the lower range and wider in the upper range.

29. Agricultural apparatus according to one of Claims 24 to 28, characterized in that the control valve (100) receiving the output signal of the microprocessor (400) is a direct current valve whose output side is fed back to the input side of the microprocessor (400).

30. Agricultural apparatus according to one of Claims 24 to 29, characterized in that electromagnetic pulse generators (200, 300) are provided for measuring the intervals of travel and therefore of area.

31. Agricultural apparatus according to Claim 20, characterized in that the electromagnetic pulse generators consist of permanent magnets (130) fastened on a ground wheel (2) or on a plurality of ground wheels (2) and of reed switches (200, 300) disposed opposite them on the carrier frame (4, 24).

32. Agricultural apparatus according to one of Claims 24 to 31, characterized in that the microprocessor (400) has stored in it action curves which can be selected via the input station (120) in accordance with their suitability for each particular cultivation material which is to be distributed.

**Revendications**

1. Dispositif agricole pour l'épandage de matière de culture liquide, pulvérulente ou granuleuse, comprenant un réservoir (7) supporté sur un châssis de support (3, 4) pour recevoir la matière de culture, caractérisé en ce que sur le châssis de support est fixée une poutre en porte-à-faux (5) sur laquelle le réservoir (7) est suspendu, au moyen d'un organe de retenue (20) déplaçable de tous côtés, avec un guidage simultané en direction verticale, et en ce que, pour la détection du poids du réservoir (7), un détecteur (21) est agencé entre le réservoir (7) et le châssis de support (3, 4).

2. Dispositif agricole suivant la revendication 1, caractérisé en ce que l'organe de retenue est formé d'au moins un câble porteur (20).

3. Dispositif agricole suivant la renvendication 1, caractérisé en ce que l'organe de retenue est formé d'au moins un élément de ressort en caoutchouc (27) ou élément d'amortissement à ressort en caoutchouc.

4. Dispositif agricole suivant l'une des revendications 1 à 3, caractérisé en ce qu'un dispositif de ressort de traction (22, 23, 25), qui essaye de tirer vers le bas le réservoir (7), est prévu.

5. Dispositif agricole suivant l'une des revendications 1 à 4, caractérisé en ce que des guides rigides (13, 14, 15) sont prévus pour le guidage du réservoir (7) en direction verticale.

6. Dispositif agricole suivant l'une des revendications 1 à 4, caractérisé en ce que des ressorts de traction (23) réalisant une traction dans des sens opposés sont prévus pour le guidage du réservoir (7) en direction verticale.

7. Dispositif agricole pour l'épandage d'une matière de culture liquide, pulvérulente ou granuleuse, comprenant un réservoir (7) supporté sur un châssis de support (3, 4) pour recevoir la matière de culture, caractérisé en ce que, sur le châssis de support (3, 4) est fixée une poutre en porte-à-faux (51) sur laquelle le réservoir (7) est supporté à partir du bas au moyen d'un organe de retenue (27) avec un guidage simultané en direction verticale et en ce que, pour la détection du poids du réservoir, un détecteur (21) est agencé entre le réservoir et le châssis de support.

8. Dispositif agricole suivant la revendication 7, caractérisé en ce que l'élément de retenue est formé d'au moins un élément de ressort en caoutchouc (27) ou élément d'amortissement en caoutchouc.

9. Dispositif agricole suivant l'une des revendications 7 et 8, caractérisé en ce qu'une articulation (29) qui agit au haut du réservoir (7), entre le réservoir et le châssis de support (3, 4), est prévue pour le guidage en direction verticale du réservoir (7).

10. Dispositif agricole suivant l'une des revendications 1 à 9, caractérisé en ce que le détecteur destiné à détecter le poids du réservoir (7) est une boîte dynamométrique électrique, agencée entre l'organe de retenue (20) et le châssis de support (3, 4).

11. Dispositif agricole suivant l'une des revendications 1 à 9, caractérisé en ce que le détecteur destiné à détecter le poids du réservoir comprend une jauge extensométrique agencée sur la poutre en porte-à-faux (5, 51).

12. Dispositif agricole pour l'épandage d'une matière de culture liquide, pulvérulente ou granuleuse, comprenant un réservoir (7) supporté sur un châssis de support (4) pour recevoir la matière de culture, caractérisé en ce que le réservoir (7) est, par l'intermédiaire d'au moins une pièce de liaison (9', 11') qui le relie de manière rigide au châssis de support (4, 14), supporté à l'extérieur du plan de son centre de gravité et en ce que, pour la détection du poids du réservoir, au moins une jauge extensométrique est agencée sur la pièce de liaison (9', 11').

13. Dispositif agricole suivant la revendication 12, caractérisé en ce que le moment de résistance de la pièce de liaison (9', 11') est de plusieurs fois plus grand dans la direction horizontale que dans la direction verticale.

14. Dispositif agricole suivant l'une des revendications 12 et 13, caractérisé en ce que plusieurs pièces de liaison (11') agencées horizontalement supportent le réservoir (7).

15. Dispositif agricole suivant la revendication 14, caractérisé en ce que les pièces de liaison agencées horizontalement se situent à hauteur du centre de gravité du réservoir.

16. Dispositif agricole suivant l'une des revendications 12 à 15, caractérisé en ce que la pièce de liaison présente un arbre de torsion (9') qui s'étend horizontalement, transversalement au sens de déplacement, et une pièce d'accouplement qui s'étend horizontalement dans le sens de déplacement et est fixée sur l'arbre de torsion et sur laquelle le réservoir est suspendu et en ce que la jauge extensométrique (21) est fixée sur l'arbre de torsion.

17. Dispositif agricole suivant la revendication 16, caractérisé en ce que la jauge extensométrique (21) est collée en lignes hélicoïdales à environ 45° en suivant sensiblement le parcours des lignes de tension-allongement.

18. Dispositif agricole suivant l'une des revendications 16 et 17, caractérisé en ce que l'arbre de torsion (9') est constitué de plusieurs morceaux qui sont agencés axialement l'un à côté de l'autre et qui sont, à leurs extrémités, serrés dans des butées (7', 8', 15') de façon à ne pas pouvoir tourner par rapport à elles.

19. Dispositif agricole suivant l'une des revendications 11 à 18, caractérisé en ce que la jauge extensométrique (21) est située sous la forme d'une résistance variable dans une branche d'un circuit en pont.

20. Dispositif agricole suivant la revendication 19, caractérisé en ce que des jauges extensomé- triques (21) sont situées dans plusieurs branches du circuit en pont (30) qui se trouve à une tension constante.

21. Dispositif agricole suivant l'une des revendications 19 et 20, caractérisé en ce que la tension de sortie du circuit en pont est filtrée ou amortie dans un filtre passe-bas et est appliquée après amplification à un indicateur (35).

22. Dispositif agricole suivant l'une des revendications 19 à 21, caractérisé en ce que des résistances situées de façon voisine dans le circuit en pont sont sollicitées de manière opposée par la force de gravité du réservoir et en ce que des résistances montées de manière opposée sont sollicitées dans le même sens.

23. Dispositif agricole pour l'épandage de matière de culture liquide, pulvérulente ou granuleuse comprenant un réservoir (7) supporté sur un châssis de support, caractérisé en ce qu'un système élastique pneumatique ou hydropneumatique (22", 28", 30", 31", 32", 50") est prévu entre le châssis de support et le réservoir et en ce que dans le système élastique est prévu un capteur de pression servant de détecteur pour la détection du poids du réservoir (7), le système élastique présentant au moins deux ressorts hydropneumatiques (22") et chaque ressort hydropneumatique (22") une unité à piston et à cylindre (26", 27") et un réservoir sous pression (30") qui est subdivisé par une paroi séparatrice élastique (33") en une section à gaz sous pression (34") et une section hydraulique (29"), la section hydraulique (29") étant reliée à l'unité à piston et cylindre (26", 27") par l'intermédiaire d'un conduit et la section à gaz sous pression (34") au capteur de pression (52") par l'intermédiaire d'un étranglement (53").

24. Dispositif agricole suivant l'une des revendications 1 à 23, caractérisé en ce que le détecteur (21, 52) prévu pour détecter le poids du réservoir (7), un dispositif de mesure du nombre de tours (200, 300) sur les roues (2) et une station d'entrée (120) pour la valeur prescrite de la quantité de matières de culture à épandre sont connectés, par leurs tensions électriques, au côté entrée d'un microprocesseur (400) qui, par son signal de sortie, commande par l'intermédiaire d'une soupape de commande (100) un moteur qui règle une commande de dosage (10, 11) pour la matière de culture à épandre.

25. Dispositif agricole suivant la revendication 24, caractérisé en ce que le détecteur (21, 52'), le dispositif de mesure du nombre de tours (200, 300) et la commande de dosage sont montés conjointement avec le microprocesseur (400) dans un circuit de réglage et sont reliés à la station d'entrée (120), la quantité épandue de la matière de culture, la surface traitée et la valeur prescrite introduite pour la quantité de matière de culture à épandre étant comparées par le microprocesseur (400) à des intervalles déterminés de distance et donc de surface, et en ce que le résultat de cette comparaison au côté sortie du microprocesseur (400) règle la commande de dosage de telle sorte que la valeur effective de la quantité épandue de matière de culture soit toujours rapprochée de la valeur prescrite.

26. Dispositif agricole suivant la revendication 25, caractérisé en ce que les valeurs effectives respectives sont comparées avec la somme totale des distances ou surfaces et ainsi avec des valeurs numériques croissantes pour améliorer la précision de la comparaison.

27. Dispositif agricole suivant la revendication 24, caractérisé en ce que les sections de comparaison sont chaque fois limitées d'après des intervalles de poids déterminés, suffisamment grands pour la précision de mesure.

28. Dispositif agricole suivant la revendication 24, caractérisé en ce qu'un amplificateur de mesure avant le microprocesseur et un amplificateur de la valeur de sortie après le microprocesseur peuvent être commandés à des degrés d'amplification différents, mais toujours opposés de manière précise, pour agrandir la largeur de bande de commande et pour rendre la résolution des valeurs numériques plus étroite dans la zone inférieure et plus large dans la zone supérieure.

29. Dispositif agricole suivant l'une des revendications 24 à 28, caractérisé en ce que la soupape de commande (100) sollicitée par le signal de sortie du microprocesseur (400) est une soupape à courant continu dont le côté sortie est ramené au côté entrée du microprocesseur (400).

30. Dispositif agricole suivant l'une des revendications 24 à 29, caractérisé en ce que des émetteurs d'impulsions électromagnétiques (200, 300) sont prévus pour la mesure des intervalles de distance et par conséquent de surface.

31. Dispositif agricole suivant la revendication 20, caractérisé en ce que les émetteurs d'impulsions électromagnétiques sont constitués d'aimants permanents (130) fixés sur une roue (2) ou sur plusieurs roues (2) et de commutateurs à lame souple (200, 300) situés en face de ceux-ci sur le châssis de support (4, 24).

32. Dispositif agricole suivant l'une des revendications 24 à 31, caractérisé en ce que dans le microprocesseur (400) sont mises en mémoire des courbes d'action qui peuvent être utilisées par l'intermédiaire de la station d'entrée (120) d'une manière correspondant à leur caractère approprié pour la matière de culture respective à appliquer.

Fig.1

Ansicht X

0 075 313

Fig.2

# FIG. 3

Ansicht X

0 075 313

0 075 313

FIG. 4

4

0 075 313

Fig.5

Fig.6

Fig.7

0 075 313

FIG. 8

0 075 313

FIG.9

FIG. 10

0 075 313

FIG.11

FIG. a

FIG. b

FIG. c

FIG. 12